# FASCICULE DE BREVET EUROPEEN

(11) **EP 2 959 125 B1**
(45) Date de publication et mention de la délivrance du brevet: **17.01.2018**
(21) Numéro de dépôt: 14709731.5
(22) Date de dépôt: 14.02.2014
(51) Int. Cl.: F01N 3/20

(54) **PROCÉDÉ POUR TRAITER DES POLLUANTS CONTENUS DANS DES GAZ D'ÉCHAPPEMENT D'UN MOTEUR À COMBUSTION INTERNE, NOTAMMENT POUR VÉHICULE AUTOMOBILE**
VERFAHREN ZUR BEHANDLUNG VON SCHADSTOFFEN AUS ABGASEN EINER BRENNKRAFTMASCHINE, INSBESONDERE FÜR EIN KRAFTFAHRZEUG
METHOD FOR TREATING POLLUTANTS CONTAINED IN EXHAUST GASES OF AN INTERNAL COMBUSTION ENGINE, IN PARTICULAR FOR A MOTOR VEHICLE

(30) Priorité: 21.02.2013 FR 1351471
(43) Date de publication de la demande: 30.12.2015
(73) Titulaire: IFP Energies nouvelles, 92500 Rueil-Malmaison (FR)
(72) Inventeur: RAUX, Stéphane, F-69530 Orlienas (FR); FROBERT, Arnaud, 69540 Irigny (FR)
(86) Numéro de dépôt international: PCT/FR2014/050310
(87) Numéro de publication internationale: WO 2014/128391

(56) Documents cités:
- DE-A1-102011 013 183
- US-A1- 2008 317 643

## Description

La présente invention se rapporte à un procédé pour traiter des polluants contenus dans des gaz d'échappement d'un moteur à combustion interne.

Les polluants contenus dans les gaz d'échappement d'un moteur qui résultent de la combustion d'un mélange carburé sont principalement les hydrocarbures imbrûlés (HC), le monoxyde de carbone (CO) et les oxydes d'azote (NO et NO₂), plus communément baptisés NOx.

Ces NOx sont des produits de la combustion qui sont formés dans des conditions de températures élevées et de fortes teneurs en oxygène. Ces conditions sont rencontrées lors de toutes les combustions ayant lieu en mélange pauvre, généralement par injection directe avec ou sans allumage commandé et cela quel que soit le carburant utilisé, essence, diesel, gaz...

Afin de respecter les normes environnementales concernant les moteurs à combustion interne et de répondre à la sévèrisation de ces normes, il est nécessaire de traiter ces polluants avant de rejeter les gaz d'échappement dans l'atmosphère. Notamment, il important de pouvoir traiter les NOx qui ont un impact important non seulement sur l'environnement mais aussi sur la santé humaine.

Comme cela est généralement connu, des dispositifs de traitement de ces polluants sont mis en place sur la ligne d'échappement des moteurs de véhicules. Ainsi, le traitement des HC et du CO s'effectue par passage de ces gaz d'échappement au travers d'un catalyseur d'oxydation, grâce auquel les HC et le CO sont oxydés.

Pour pouvoir traiter complètement les NOx, les gaz d'échappement traversent un autre catalyseur, dit catalyseur SCR - abréviation pour les termes anglais de Selective Catalytic Reduction (Réduction Catalytique Sélective), qui permet de réduire sélectivement les NOx, idéalement en azote, grâce à l'action d'un agent réducteur. Cet agent peut être de l'ammoniac ou un composé générant de l'ammoniac par décomposition comme de l'urée, un hydrocarbure, de l'hydrogène, qui est généralement injecté en amont du catalyseur SCR. Cet agent réducteur se mélange aux gaz d'échappement, puis réagit avec les NOx des gaz d'échappement dans le catalyseur SCR selon plusieurs réactions chimiques possibles. Comme cela est notamment mentionné dans le document EP 0 758 714, un tel dispositif comprend une ligne d'échappement des gaz provenant d'un moteur à combustion interne et sur laquelle sont placés le catalyseur d'oxydation, des moyens pour injecter l'agent réducteur, et le catalyseur SCR.

Le problème posé avec une telle installation réside dans le fait que le catalyseur SCR n'est pleinement opérationnel que lorsqu'il a atteint une température généralement supérieure à environ 200°C.

C'est pour cette raison qu'il est prévu, comme cela est mieux décrit dans le document précité, deux voies de circulation des gaz d'échappement, une voie comportant le catalyseur trois voies et le catalyseur SCR et une autre voie de circulation aboutissant directement à l'entrée du catalyseur trois voies.

Cette installation, outre le fait qu'elle est d'une élaboration compliquée et volumineuse avec deux voies de circulation, nécessite des moyens de vannage associés à des stratégies de pilotage pour commander la circulation des gaz d'échappement dans l'une ou l'autre voie.

De plus, lorsque la voie comportant le catalyseur SCR est alimentée par les gaz d'échappement, ce catalyseur est parcouru par des gaz d'échappement très chauds qui lui occasionnent un choc thermique. Un tel choc thermique peut l'endommager et notamment lorsque ce choc est répétitif et plus particulièrement quand le catalyseur SCR est à température ambiante.

Dans le document US 2008/317643, le problème consiste à éliminer le dépôt solide de nitrate d'ammonium qui perturbe le fonctionnement du filtre à particule. Ce problème est résolu par une augmentation de la température des gaz d'échappement qui "brulent" le dépôt solide.

Le document DE 10 2011 013 183 se rapporte à un procédé pour éviter la formation de N20 à la sortie du catalyseur. Le procédé consiste notamment à évaluer la masse de nitrate d'ammonium pour agir sur celle-ci afin de la décomposer sans forme de N20

Dans les cas précités, il est à noter que la formation de nitrate d'ammonium n'est pas pilotée ou contrôlée, ce qui perturbe le fonctionnel de la catalyse SCR

La présente invention se propose de remédier aux inconvénients ci-dessus mentionnés grâce à un procédé qui permet d'accélérer la montée en température du catalyseur SCR avec une conception simple et un coût réduit.

A cet effet, la présente invention concerne un procédé pour traiter des polluants contenus dans des gaz d'échappement circulant dans une ligne d'échappement et provenant de la combustion dans au moins un cylindre d'un moteur à combustion interne, notamment pour véhicule automobile, ladite ligne comprenant au moins un catalyseur à réduction catalytique sélective pour le traitement des oxydes d'azotes contenus dans ces gaz et au moins un moyen d'injection d'un agent réducteur, caractérisé en ce que le procédé consiste :
- à former du nitrate d'ammonium dans le catalyseur SCR pour disposer d'une quantité maitrisée de nitrate d'ammonium déposée dans ledit catalyseur de façon à générer l'exotherme souhaité par décomposition exothermique du nitrate d'ammonium pour accélérer la montée en température du catalyseur SCR ou pour maintenir ce catalyseur en température de façon à rendre plus précocement opérationnelle le traitement des oxydes d'azotes (NOx) par la catalyse SCR,
- à réaliser la décomposition du nitrate d'ammonium par apport d'énergie extérieure pour des températures de gaz d'échappement inférieures à environ 200°C en utilisant un hydrocarbure pour augmenter la sensibilité du nitrate d'ammonium de manière à obtenir une décomposition fortement exothermique de ce nitrate.

Le procédé peut consister à former du nitrate d'ammonium en mettant en présence l'ammoniac issu de l'agent réducteur introduit à l'échappement avec du NO₂ issu de la combustion.

Le procédé peut consister à placer au moins un catalyseur en amont du catalyseur SCR.

Dans la configuration où le catalyseur est un catalyseur d'oxydation, le procédé peut consister à former du nitrate d'ammonium en mettant en présence l'ammoniac issu de l'agent réducteur introduit à l'échappement avec du NO₂ résultant de l'oxydation d'une partie du NO issu de la combustion sur le catalyseur d'oxydation.

Le procédé peut consister à former le nitrate d'ammonium lorsque le ratio molaire NO₂/NOx des gaz d'échappement est supérieur à environ 0,5.

Le procédé peut consister à estimer la quantité de nitrate d'ammonium dans le catalyseur SCR par un observateur intégré dans le logiciel de contrôle du moteur.

Le procédé peut consister à utiliser un hydrocarbure imbrûlé provenant de la combustion dans ledit au moins un cylindre.

Le procédé peut consister à injecter un hydrocarbure dans la ligne d'échappement en amont du catalyseur SCR.

Le procédé peut consister à utiliser un agent réducteur contenant de l'ammoniac.

Le procédé peut consister à utiliser un agent précurseur de réducteur contenant de l'ammoniac.

Le procédé peut consister à placer au moins un catalyseur ou un filtre à particules ou un autre catalyseur SCR en aval du premier catalyseur SCR.

Les autres caractéristiques et avantages de l'invention vont apparaître maintenant à la lecture de la description qui va suivre, donnée à titre uniquement illustratif et non limitatif, et à laquelle est annexée la figure unique qui est un schéma montrant un dispositif de traitement des gaz d'échappement d'un moteur à combustion interne.

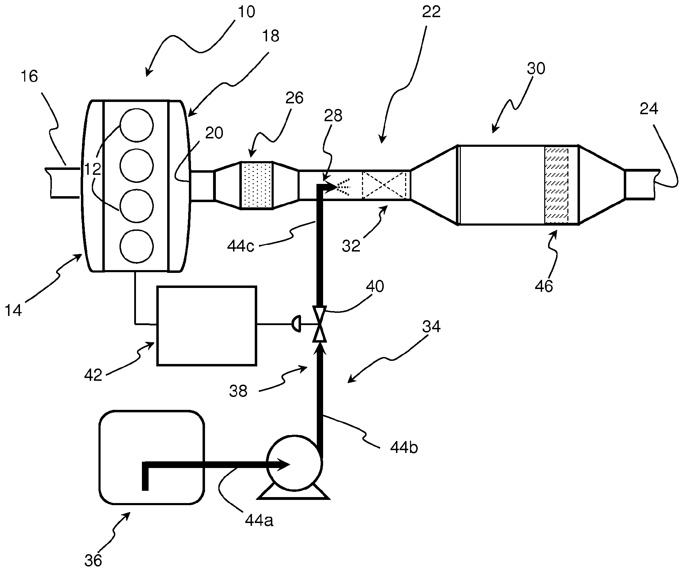

En se rapportant à la figure 1, le moteur à combustion interne 10, notamment de type Diesel, comporte au moins un cylindre 12, un répartiteur d'admission 14 avec son admission d'air extérieur 16 et un collecteur d'échappement 18 permettant de collecter les gaz d'échappement résultant de la combustion d'un mélange carburé dans les cylindres pour les diriger vers l'entrée 20 d'une ligne d'échappement 22.

Sur la figure 1, la ligne d'échappement porte, dans le sens de circulation des gaz d'échappement allant de l'entrée 20 de cette ligne vers sa sortie 24, au moins un catalyseur, notamment un catalyseur d'oxydation 26, placé au plus près de l'entrée 20 de gaz d'échappement, suivi d'un injecteur d'un agent réducteur 28 placé en regard d'un catalyseur SCR 30. Pour ce catalyseur, deux types principaux de composition peuvent être utilisés, soit les catalyseurs à base d'oxydes mixtes, comme V₂O₅-WO₃/TiO₂, qui sont très utilisés pour les véhicules poids lourd, soit les catalyseurs avec des structures de type aluminosilicates appelées zéolithes, échangées avec des ions métalliques (classiquement Fer ou Cuivre), plus adaptées aux applications légères.

Cette ligne peut porter également un capteur de température (non représenté) des gaz d'échappement qui est logé à proximité de l'entrée du catalyseur SCR. Ce capteur permet, en association avec le calculateur que comporte habituellement tout moteur à combustion interne, de connaître la température des gaz d'échappement qui pénètrent dans ce catalyseur. Cette température peut encore être déterminée à l'aide d'un modèle de thermique d'échappement.

Avantageusement, une zone de mélange ou mélangeur 32 peut être prévu entre l'injecteur 28 et le catalyseur SCR 30 pour réaliser un mélange quasi uniforme entre l'agent réducteur et les gaz d'échappement.

L'injecteur 28 fait partie d'un circuit d'alimentation 34 en agent réducteur qui comprend un réservoir 36 contenant l'agent et un pompe doseuse 38 avec son électrovanne 40 reliée à un circuit de commande 42. Le réservoir, la pompe doseuse avec son électrovanne et l'injecteur sont reliés entre eux par des conduites de circulation d'agent réducteur, respectivement 44a, 44b et 44c.

Sans sortir du cadre de l'invention, la ligne d'échappement décrite ci-dessus peut ne pas comporter de catalyseur d'oxydation en amont du catalyseur SCR et/ou peut comprendre un ou plusieurs catalyseurs 46 ou un filtre à particules (FAP) ou un autre catalyseur SCR, en aval de ce catalyseur SCR, comme représenté en pointillé sur la figure.

Le fonctionnement du dispositif va maintenant être explicité en relation avec un agent réducteur contenant de l'ammoniac et/ou un agent précurseur de réducteur contenant de l'ammoniac qui est introduit dans les gaz d'échappement. Cet agent peut y être introduit, soit directement sous forme gazeuse dans le cas où il est stocké sous forme de complexes solides, comme ceux commercialisés sous la dénomination de "Système ASDS" de la société Amminex ou sous la dénomination "Système Solid SCR" de la société Tenneco, soit indirectement par injection d'un précurseur liquide, par exemple de l'urée en solution aqueuse, telle que celle plus connue sous la terminologie "AdBlue" dans les pays européens ou sous l'abréviation DEF (Diesel Exhaust Fluid) aux Etats-Unis.

Dans l'exemple décrit ci-après, l'agent réducteur utilisé est de l'urée en solution aqueuse qui est stocké dans le réservoir 36.

Dans des conditions optimales de fonctionnement du catalyseur SCR, c'est-à-dire, lorsque la température des gaz d'échappement mesurée par le capteur de température est supérieure à environ 200°C, l'urée en solution aqueuse est soutirée du réservoir 36 par la pompe doseuse 38 pour être injectée dans la ligne d'échappement par l'injecteur 28.

Cette urée en solution aqueuse, dont la quantité est contrôlée par le circuit de commande 42 agissant sur l'électrovanne 40 en fonction des paramètres de fonctionnement du moteur 10, est mélangée avec les gaz d'échappement dans la zone de mélange 32. Sous l'effet de la température des gaz, l'eau que contient l'urée en solution aqueuse est rapidement évaporée, puis chaque molécule d'urée se décompose suivant deux étapes en molécules d'ammoniac :

(NH₂)₂CO ==> NH₃ + HNCO (1)

HNCO + H₂O ==> NH₃ + CO₂ (2)

Ainsi, en fonction de la composition en NO et NO₂ des NOx des gaz d'échappement, de la température et du débit de ces gaz, il peut se produire trois réactions principales resultant de la réduction catalytique selective par l'ammoniac.

La première réaction, dite "Fast SCR", est :

2 NO + 2 NO₂ + 4 NH₃ → 4 N₂ + 6 H₂O (3)

La réaction, dite standard, correspond à :

4 NO + 4 NH₃ + O₂ → 4 N₂ + 6 H₂O (4)

Enfin, la réaction baptisée "NO₂ SCR" répond à :

6 NO₂ + 8 NH₃ → 7 N₂ + 12 H₂O (5)

En se rapportant à la figure, la réaction (1) a principalement lieu dans la zone de mélange 32, alors que les autres réactions (2) et (3) ou (4) ou (5) se déroulent au contact du catalyseur SCR.

Dans une campagne d'essais réalisée par le demandeur, il a été mis à jour que, pour des températures de gaz d'échappement inférieures à environ 200°C et lorsque le NO₂ est majoritairement présent, une partie du NH₃ libéré par les réactions (1) et (2) et le NO₂ ne réagit pas pour former du N₂ comme souhaité par la réaction SCR (réaction (3), (4) ou (5)), mais se combinent pour former du nitrate d'ammonium (NH₄NO₃).

Ceci se produit généralement lors de l'utilisation du moteur avec de faibles températures de gaz d'échappement, telles que le ralenti, les faibles charges ou les levers de pied de l'accélérateur. Pour des raisons de simplification, la suite de la description ne fera mention que du terme générique "faible utilisation" pour regrouper les trois cas d'utilisation ci-dessus.

Ce nitrate d'ammonium se dépose ensuite sous forme solide dans le catalyseur.

Le nitrate d'ammonium présent dans le catalyseur SCR peut se décomposer, de façon faiblement exothermique, dés environ 185°C sous forme de H₂O, de N₂O, voire d'ammoniac et de NO₂, ou, de façon très exothermique à une température des gaz d'environ 300°C, sous forme de H₂O, O₂ et N₂.

Durant cette campagne d'essais, le demandeur a pu mettre en exergue que le nitrate d'ammonium a la particularité de réagir de façon très exothermique à des températures bien inférieures à 300°C avec un faible apport d'énergie extérieur si la sensibilité du nitrate d'ammonium est augmentée, c'est-à-dire si l'énergie d'activation minimale nécessaire pour une décomposition auto-entretenue de la substance est abaissée. C'est le cas si le nitrate d'ammonium entre en contact avec, entre autre, des hydrocarbures en faible concentration.

Pour des proportions stoechiométriques, par exemple, la réaction s'écrit:

3n NH₄NO₃ + (-CH₂-)n → 3n N₂ + 7n H₂O + n CO₂ (6)

Les hydrocarbures peuvent aussi avoir partiellement réagi sur le catalyseur d'oxydation en formant du nitrométhane, qui, par la suite, va entrer en contact avec le nitrate d'ammonium pour le décomposer selon

3 NH₄NO₃ + 2 CH₃NO₂ --> 2 CO₂ + 9 H₂O + 4 N₂ (7)

Il convient donc de disposer d'une quantité maîtrisée de nitrate d'ammonium déposée sur le catalyseur SCR de façon à générer l'exotherme souhaité.

Pour cela, dès que les conditions de température propices sont rencontrées, typiquement en-deçà de 200°C, il convient de mettre en présence soit l'ammoniac issu de l'injection de l'agent réducteur à l'échappement, soit l'ammoniac déjà présent, par adsorption, sur le catalyseur, avec du NO₂ issu de la combustion et/ou de l'oxydation d'une partie du NO issu de la combustion sur le catalyseur d'oxydation quand celui-ci est présent.

C'est notamment le cas dans les conditions appelées de "faible utilisation" du moteur où l'injection de réducteur contenant de l'ammoniac ou précurseur d'ammoniac pourra être recherchée.

La quantité de nitrate d'ammonium stocké peut être estimée par un observateur intégré dans le logiciel de contrôle moteur, faisant appel aux informations, entre autres, de températures en divers endroits de la ligne d'échappement (température de gaz en amont du catalyseur SCR, estimation ou mesure de la température du catalyseur SCR), débit de gaz échappement, historique de la quantité de réducteur injectée, concentration estimée ou mesurée en NO et NO₂, et quantité estimée d'ammoniac adsorbé sur le catalyseur SCR.

Selon l'état de cet observateur, il pourra être souhaité de générer du nitrate d'ammonium selon le procédé décrit plus haut.

Compte tenu de la faible température des gaz d'échappement, le catalyseur d'oxydation 26 placé en amont du catalyseur SCR n'est pas amorcé ou partiellement actif, et laisse passer les molécules d'hydrocarbures imbrûlés (HC) issues de la combustion. Ces HC sensibilisent suffisamment le nitrate de façon à le décomposer de façon très exothermique par apport modéré d'énergie thermique contenue dans les gaz issus de la combustion dans le moteur.

Grâce à cela, la décomposition exothermique du nitrate d'ammonium est utilisée pour accélérer la montée en température du catalyseur SCR ou pour maintenir ce catalyseur en température de façon à rendre plus précocement opérationnelle la dépollution des NOx par la catalyse SCR.

Il peut être noté que l'exothermicité de cette décomposition peut également servir à l'élévation ou au maintien de la température, par transport d'enthalpie, des éléments de traitement des gaz situés en aval de ce catalyseur SCR.

Pour que le nitrate d'ammonium puisse se former et se déposer sur le catalyseur SCR, en plus de l'ammoniac stocké sur le catalyseur SCR ou issu de la décomposition de l'agent réducteur injecté à l'échappement, les NO₂ et les NOx des gaz d'échappement doivent être présents en entrée du catalyseur SCR 30 avec, préférentiellement, un ratio molaire NO₂/NOx supérieur à 0,5.

Ce ratio peut être principalement assuré par le résultat de la combustion dans les cylindres 12 dans les cas où il n'y aurait pas de catalyseur d'oxydation en amont du catalyseur SCR 30 ou pour des conditions de température où le catalyseur d'oxydation n'est pas ou peu actif. Il est à noter que dans le cas où le catalyseur d'oxydation est actif, il permet d'oxyder une part de NO en NO₂.

L'apport d'espèces à même de sensibiliser le nitrate d'ammonium de façon à le décomposer de façon très exothermique peut être de plusieurs sortes, lorsque le catalyseur d'oxydation n'est pas actif ou faiblement actif, telles que par exemple :
- Des hydrocarbures imbrûlés issus de la combustion dans les cylindres 12 du moteur;
- Des hydrocarbures provenant de l'injection d'hydrocarbures dans les cylindres, comme une post injection;
- Des hydrocarbures injectés dans la ligne d'échappement en amont du catalyseur SCR;

L'énergie requise pour initier la décomposition fortement exothermique du nitrate d'ammonium peut être apportée par l'enthalpie des gaz d'échappement, ou par tout autre système tel qu'une résistance électrique chauffante.

De plus, il peut être remarqué que le nitrate d'ammonium ainsi formé est utilisable :
- après un arrêt du moteur, pour amorcer le catalyseur SCR (et les catalyseurs éventuellement situés à son aval) au démarrage suivant selon le principe décrit ci-dessus,
- en cas de maintien du fonctionnement du moteur, si les catalyseurs sont désamorcés, pour réamorcer le catalyseur SCR (et les catalyseurs éventuellement situés à son aval) selon le même principe décrit, ou si les catalyseurs ne sont pas désamorcés, pour assurer les réactions de réduction des NOx dans lesquelles il intervient classiquement.

## Revendications

1. Procédé pour traiter des polluants contenus dans des gaz d'échappement circulant dans une ligne d'échappement (22) et provenant de la combustion dans au moins un cylindre (12) d'un moteur à combustion interne (10), notamment pour véhicule automobile, ladite ligne comprenant au moins un catalyseur à réduction catalytique sélective SCR (30) pour le traitement des oxydes d'azotes (NOx) contenus dans ces gaz et au moins un moyen d'injection (28) d'un agent réducteur, **caractérisé en ce que** le procédé consiste :
- à former du nitrate d'ammonium dans le catalyseur SCR (30) pour disposer d'une quantité maitrisée de nitrate d'ammonium déposée dans ledit catalyseur de façon à générer l'exotherme souhaité par décomposition exothermique du nitrate d'ammonium pour accélérer la montée en température du catalyseur SCR ou pour maintenir ce catalyseur en température de façon à rendre plus précocement opérationnelle le traitement des oxydes d'azotes (NOx) par la catalyse SCR,
- à réaliser la décomposition du nitrate d'ammonium par apport d'énergie extérieure pour des températures de gaz d'échappement inférieures à environ 200°C en utilisant un hydrocarbure pour augmenter la sensibilité du nitrate d'ammonium de manière à obtenir une décomposition fortement exothermique de ce nitrate.

2. Procédé selon la revendication 1, **caractérisé en ce qu'**il consiste à former du nitrate d'ammonium en mettant en présence l'ammoniac issu de l'agent réducteur introduit à l'échappement avec du NO₂ issu de la combustion.

3. Procédé selon la revendication 1, **caractérisé en ce qu'**il consiste à placer au moins un catalyseur (26) en amont du catalyseur SCR (30).

4. Procédé selon la revendication 3 dans lequel le catalyseur (26) est un catalyseur d'oxydation, **caractérisé en ce qu'**il consiste à former du nitrate d'ammonium en mettant en présence l'ammoniac issu de l'agent réducteur introduit à l'échappement avec du NO₂ résultant de l'oxydation d'une partie du NO issu de la combustion sur le catalyseur d'oxydation.

5. Procédé selon l'une des revendications 1 à 4, **caractérisé en ce qu'**il consiste à former le nitrate d'ammonium lorsque le ratio molaire NO₂/NOx des gaz d'échappement est supérieur à environ 0,5.

6. Procédé selon l'une des revendications 1 à 5, **caractérisé en ce qu'**il consiste à estimer la quantité de nitrate d'ammonium dans le catalyseur SCR (30) par un observateur intégré dans le logiciel de contrôle du moteur.

7. Procédé selon la revendication 1, **caractérisé en ce qu'**il consiste à utiliser un hydrocarbure imbrûlé provenant de la combustion dans ledit au moins un cylindre (12).

8. Procédé selon la revendication 1, **caractérisé en ce qu'**il consiste à injecter un hydrocarbure dans la ligne d'échappement (22) en amont du catalyseur SCR (30).

9. Procédé selon la revendication 1, **caractérisé en ce qu'**il consiste à utiliser un agent réducteur contenant de l'ammoniac.

10. Procédé selon la revendication 1, **caractérisé en ce qu'**il consiste à utiliser un agent précurseur de réducteur contenant de l'ammoniac.

11. Procédé selon la revendication 1, **caractérisé en ce qu'**il consiste à placer au moins un catalyseur (46) ou un filtre à particules ou un autre catalyseur SCR en aval du premier catalyseur SCR (30).

## Patentansprüche

1. Verfahren zur Behandlung von Schadstoffen, die in Abgasen enthalten sind, die in einer Abgasleitung (22) strömen und aus der Verbrennung in mindestens einem Zylinder (12) eines Verbrennungsmotors (10), insbesondere für ein Kraftfahrzeug, stammen, wobei die Leitung mindestens einen SCR-Katalysator mit selektiver katalytischer Reduktion (30) zur Behandlung der in diesen Gasen enthaltenen Stickoxide (NOx) und mindestens eine Einrichtung zur Injektion (28) eines Reduktionsmittels umfasst, **dadurch gekennzeichnet, dass** das Verfahren Folgendes umfasst:
- Bilden von Ammoniumnitrat in dem SCR-Katalysator (30), um über eine kontrollierte Menge an Ammoniumnitrat zu verfügen, die in dem Katalysator abgeschieden ist, um die gewünschte Wärme durch exotherme Zersetzung des Ammoniumnitrats zu erzeugen, um den Temperaturanstieg des SCR-Katalysators zu beschleunigen, oder um diesen Katalysator auf Temperatur zu halten, um die Behandlung der Stickoxide (NOx) durch die SCR-Katalyse früher einsetzbar zu machen,
- Durchführen der Zersetzung des Ammoniumnitrats durch Fremdenergiezufuhr für Abgastemperaturen von weniger als etwa 200 °C unter Verwendung eines Kohlenwasserstoffs, um die Empfindlichkeit des Ammoniumnitrats zu erhöhen, um eine stark exotherme Zersetzung dieses Nitrats zu erhalten.

2. Verfahren nach Anspruch 1, **dadurch gekennzeichnet, dass** es das Bilden von Ammoniumnitrat umfasst, indem der Ammoniak aus dem Reduktionsmittel, das in die Abgase eingeführt wurde, mit NO₂ aus der Verbrennung in Kontakt gebracht wird.

3. Verfahren nach Anspruch 1, **dadurch gekennzeichnet, dass** es das Anordnen mindestens eines Katalysators (26) stromaufwärts des SCR-Katalysators (30) umfasst.

4. Verfahren nach Anspruch 3, wobei der Katalysator (26) ein Oxidationskatalysator ist, **dadurch gekennzeichnet, dass** es das Bilden von Ammoniumnitrat umfasst, indem der Ammoniak aus dem Reduktionsmittel, das in die Abgase eingeführt wurde, mit NO₂, das aus der Oxidation eines Teils des NO aus der Verbrennung resultiert, auf dem Oxidationskatalysator in Kontakt gebracht wird.

5. Verfahren nach einem der Ansprüche 1 bis 4, **dadurch gekennzeichnet, dass** es das Bilden von Ammoniumnitrat umfasst, wenn das NO₂/Nox-Molverhältnis der Abgase größer als etwa 0,5 ist.

6. Verfahren nach einem der Ansprüche 1 bis 5, **dadurch gekennzeichnet, dass** es das Schätzen der Menge an Ammoniumnitrat in dem SCR-Katalysator (30) durch einen Beobachter umfasst, der in die Software zum Steuern des Motors integriert ist.

7. Verfahren nach Anspruch 1, **dadurch gekennzeichnet, dass** es die Verwendung eines nicht verbrannten Kohlenwasserstoffs umfasst, der aus der Verbrennung in dem mindestens einen Zylinder (12) stammt.

8. Verfahren nach Anspruch 1, **dadurch gekennzeichnet, dass** es das Einspriten mindestens eines Kohlenwasserstoffs in die Abgasleitung (22) stromaufwärts des SCR-Katalysators (30) umfasst.

9. Verfahren nach Anspruch 1, **dadurch gekennzeichnet, dass** es das Verwenden eines Reduktionsmittels, das Ammoniak enthält, umfasst.

10. Verfahren nach Anspruch 1, **dadurch gekennzeichnet, dass** es das Verwenden eines Reduktionsmittel-Vorläufers, der Ammoniak enthält, umfasst.

11. Verfahren nach Anspruch 1, **dadurch gekennzeichnet, dass** es das Anordnen mindestens eines Katalysators (46) oder eines Partikelfilters oder eines anderen SCR-Katalysators stromabwärts des ersten SCR-Katalysators (30) umfasst.

## Claims

1. A method of treating pollutants contained in exhaust gases circulating in an exhaust line (22) and generated by combustion in at least one cylinder (12) of an internal-combustion engine (10), notably for a motor vehicle, said line comprising at least one selective catalytic reduction SCR catalyst (30) for treating the nitrogen oxides (NOx) contained in these gases and at least one reducing agent injection means (28), **characterized in that** the method consists in:
- forming ammonium nitrate in SCR catalyst (30) in order to have a controlled amount of ammonium nitrate deposited in said catalyst so as to generate the desired exotherm by exothermic decomposition to accelerate the temperature rise of the SCR catalyst or to maintain the temperature of this catalyst so as to make the nitrogen oxides (NOx) treatment by SCR catalysis operational earlier,
- carrying out decomposition of the ammonium nitrate by external energy supply for exhaust gas temperatures below approximately 200°C using a hydrocarbon to increase the ammonium nitrate sensitivity so as to obtain a highly exothermic decomposition of this nitrate.

2. A method as claimed in claim 1, **characterized in that** it consists in forming ammonium nitrate by bringing together the ammonia from the reducing agent fed to the exhaust and combustion-generated NO₂.

3. A method as claimed in claim 1, **characterized in that** it consists in arranging at least one catalyst (26) upstream from SCR catalyst (30).

4. A method as claimed in claim 3, wherein catalyst (26) is an oxidation catalyst, **characterized in that** it consists in forming ammonium nitrate by bringing together the ammonia from the reducing agent fed to the exhaust and NO₂ generated by the oxidation of part of the combustion-generated NO on the oxidation catalyst.

5. A method as claimed in any one of claims 1 to 4, **characterized in that** it consists in forming the ammonium nitrate when the NO₂/NOx molar ratio of the exhaust gases is above approximately 0.5.

6. A method as claimed in any one of claims 1 to 5, **characterized in that** it consists in estimating the amount of ammonium nitrate in SCR catalyst (30) by means of an observer integrated in the engine control software.

7. A method as claimed in claim 1, **characterized in that** it consists in using an unburnt hydrocarbon generated by the combustion in said at least one cylinder (12).

8. A method as claimed in claim 1, **characterized in that** it consists in injecting a hydrocarbon into exhaust line (22) upstream from SCR catalyst (30).

9. A method as claimed in claim 1, **characterized in that** it consists in using an ammonia-containing reducing agent.

10. A method as claimed in claim 1, **characterized in that** it consists in using an ammonia-containing reducing agent precursor.

11. A method as claimed in claim 1, **characterized in that** it consists in arranging at least one catalyst (46) or a particle filter or another SCR catalyst downstream from first SCR catalyst (30).
